(19) Europäisches Patentamt
European Patent Office
Office européen des brevets

(11) EP 2 479 230 A1

(12) EUROPEAN PATENT APPLICATION

(43) Date of publication:
25.07.2012 Bulletin 2012/30

(51) Int Cl.:
C09J 7/02 (2006.01)          C09J 7/00 (2006.01)
C09J 133/06 (2006.01)

(21) Application number: 12152291.6

(22) Date of filing: 24.01.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 25.01.2011 JP 2011013479

(71) Applicant: Nitto Denko Corporation
Ibaraki-shi, Osaka (JP)

(72) Inventors:
• Takarada, Shou
Ibaraki-shi, Osaka (JP)

• Kishioka, Hiroaki
Ibaraki-shi, Osaka (JP)
• Nonaka, Takahiro
Ibaraki-shi, Osaka (JP)
• Katami, Hirofumi
Ibaraki-shi, Osaka (JP)
• Fujita, Masato
Ibaraki-shi, Osaka (JP)

(74) Representative: Grünecker, Kinkeldey,
Stockmair & Schwanhäusser
Leopoldstrasse 4
80802 München (DE)

(54) **Optical pressure-sensitive adhesive sheet**

(57) The present invention provides an optical pressure-sensitive adhesive sheet excellent in the productivity, and is reduced in the remaining of an air bubble after an autoclave treatment or the generation of a delayed bubble when laminating the optical pressure-sensitive adhesive sheet to an optical member. The present invention relates to an optical pressure-sensitive adhesive sheet, which comprises an acrylic pressure-sensitive adhesive layer, wherein the acrylic pressure-sensitive adhesive layer is formed by an active energy ray polymerization, a gel fraction of the acrylic pressure-sensitive adhesive layer is 80 wt% or less, and a content of a component having a molecular weight of 50,000 or less in a sol matter of the acrylic pressure-sensitive adhesive layer is 20 wt% or less.

EP 2 479 230 A1

**Description**

BACKGROUND OF THE INVENTION

Technical Field

The present invention relates to an optical pressure-sensitive adhesive sheet. More particularly, the present invention relates to an optical pressure-sensitive adhesive sheet used in lamination of an optical member, manufacture of an optical product, or the like.

Background Art

Recently, in various fields, display devices such as a liquid crystal display (LCD) or an input device such as a touch panel, which is used by combining with the display device has been widely used. In manufacturing of the display device or the input device, a transparent pressure-sensitive adhesive sheet (pressure-sensitive adhesive tape) is used for laminating an optical member. For example, the transparent pressure-sensitive adhesive sheet is used for laminating the touch panel and various display devices or optical members (e.g., a protective plate) (for example, see Patent Documents 1 to 3).

When laminating an optical member by using a pressure-sensitive adhesive sheet, an air bubble is usually entrained in the interface between the optical member and the pressure-sensitive adhesive sheet. The air bubble is generally removed through dispersion as fine bubbles by applying a pressure treatment in an autoclave (sometimes referred to as an "autoclave treatment") after the optical member is laminated using the pressure-sensitive adhesive sheet.

However, there is a problem that even after applying the autoclave treatment, an air bubble still remains. There is also a problem that even when the air bubble is removed by an autoclave treatment, an air bubble again appears with the passage of time (so-called delayed bubble) in the interface between the pressure-sensitive adhesive sheet and the optical member. Such a problem tends to be salient particularly when laminating glass-made optical members having high rigidity and deflection resistance with each other. The remaining of an air bubble or the generation of a delayed bubble gives rise to reduction in the yield at the production of an optical member or a product using the optical member. In the specification of the present invention, the air bubble again appearing with the passage of time after an autoclave treatment is sometimes referred to, in particular, as a "delayed bubble".

There are known pressure-sensitive adhesive sheets for adhering and fixing a functional film to a display device, which are a pressure-sensitive adhesive sheet free from generation of lifting or air bubble in the adhesion interface even when subjected to a harsh environment such as high-temperature environment or high-temperature and high-humidity environment for a long time (see, Patent Document 4). However, the pressure-sensitive adhesive sheets above have a problem of productivity loss, because after once obtaining an acrylic polymer constituting the pressure-sensitive adhesive layer, an operation for removing the low-molecular-weight component from the acrylic polymer must be applied, that is, the production process is cumbersome.

Patent Document 1: JP-A-2003-238915
Patent Document 2: JP-A-2003-342542
Patent Document 3: JP-A-2004-231723
Patent Document 4: Japanese Patent No. 3,819,661

SUMMARY OF THE INVENTION

Accordingly, an object of the present invention is to provide an optical pressure-sensitive adhesive sheet which is excellent in the productivity, and is reduced in the remaining of an air bubble (bubble residue) after an autoclave treatment or the generation of a delayed bubble when laminating to an optical member,.

As a result of intensive studies, the present inventors have found that when in a pressure-sensitive adhesive sheet including an acrylic pressure-sensitive adhesive layer, the acrylic pressure-sensitive adhesive layer is formed by an active energy ray polymerization and furthermore, a gel fraction of the acrylic pressure-sensitive adhesive layer and a content of a component having a molecular weight of 50,000 or less in a sol matter of the acrylic pressure-sensitive adhesive layer are controlled to specific ranges, an optical pressure-sensitive adhesive sheet which is excellent in the productivity, and is reduced in the remaining of an air bubble after an autoclave treatment or the generation of a delayed bubble when laminating to an optical member, can be obtained. The present invention has been accomplished based on these findings.

That is, the present invention provides an optical pressure-sensitive adhesive sheet, which includes an acrylic pressure-sensitive adhesive layer, wherein the acrylic pressure-sensitive adhesive layer is formed by an active energy ray polymerization, a gel fraction of the acrylic pressure-sensitive adhesive layer is 80 wt% or less, and a content of a component having a molecular weight of 50,000 or less in a sol matter of the acrylic pressure-sensitive adhesive layer is 20 wt% or less.

In the optical pressure-sensitive adhesive sheet above, the acrylic pressure-sensitive adhesive layer preferably includes an acrylic pressure-sensitive adhesive layer containing an acrylic polymer including, as an essential monomer component, an alkyl ester (meth)acrylate and/or an alkoxyalkyl ester (meth)acrylate.

In the optical pressure-sensitive adhesive sheet above, the total light transmittance is preferably 87% or more and the haze is preferably 3.0% or less.

The optical pressure-sensitive adhesive sheet above preferably consists of the acrylic pressure-sensitive adhesive layer.

In the optical pressure-sensitive adhesive sheet above, the total thickness is preferably from 25 to 500 $\mu$m.

The optical pressure-sensitive adhesive sheet above is preferably used for lamination of an optical member.

In the optical pressure-sensitive adhesive sheet above, the optical member is preferably a glass-made optical member.

The optical pressure-sensitive adhesive sheet of the present invention has the above-described configuration and therefore, after an optical member is laminated using the pressure-sensitive adhesive sheet and an autoclave treatment is applied, an air bubble hardly remains in the interference between the pressure-sensitive adhesive sheet and the optical member. Also, after the autoclave treatment, generation of a delayed bubble with the passage of time (for example, after standing at room temperature for 24 hours or after standing at 85°C for 24 hours) is suppressed. Furthermore, the optical pressure-sensitive adhesive sheet of the present invention can be produced without passing through a cumbersome step such as operation of removing the low-molecular-weight component and therefore, is excellent in productivity.

## DETAILED DESCRIPTION OF THE INVENTION

The optical pressure-sensitive adhesive sheet of the present invention (sometimes simply referred to as the "pressure-sensitive adhesive sheet of the present invention") includes at least an acrylic pressure-sensitive adhesive layer which is formed by an active energy ray polymerization and in which the gel fraction is 80 wt% or less and the content of the component having a molecular weight of 50,000 or less in the sol matter is 20 wt% or less.

The pressure-sensitive adhesive sheet of the present invention may be a double-sided pressure-sensitive adhesive sheet where both surfaces of the sheet are a pressure-sensitive adhesive layer surface (pressure-sensitive adhesive surface), or a single-sided pressure-sensitive adhesive sheet where only one surface of the sheet is a pressure-sensitive adhesive layer surface (pressure-sensitive adhesive surface). Of these, from the standpoint of laminating two members with each other, a double-sided pressure-sensitive adhesive sheet is preferred. The "pressure-sensitive adhesive sheet" as used in the present invention includes a tape form, that is, a "pressure-sensitive adhesive tape". Also, the "'pressure-sensitive adhesive layer surface'" of the pressure-sensitive adhesive sheet is sometimes referred to as a "pressure-sensitive adhesive surface".

The pressure-sensitive adhesive sheet of the present invention may be a "substrateless type pressure-sensitive adhesive sheet" (hereinafter referred to as "substrateless pressure-sensitive adhesive sheet" in some cases) that does not have a substrate (substrate layer), or a pressure-sensitive adhesive sheet with a substrate. The substrateless pressure-sensitive adhesive sheet may be, for example, a double-sided pressure-sensitive adhesive sheet consisting of the pressure-sensitive adhesive layers of the present invention, a double-sided pressure-sensitive adhesive sheet including the pressure-sensitive adhesive layers of the present invention and a pressure-sensitive adhesive layer other than the pressure-sensitive adhesive sheet of the present invention (hereinafter, also referred to as "other pressure-sensitive adhesive layer" in some cases), and the like. The pressure-sensitive adhesive sheet with substrate may be a pressure-sensitive adhesive sheet including the pressure-sensitive adhesive layer of the present invention on at least one side of the substrate. Among the pressure-sensitive adhesive sheets, from the viewpoint of making thinner or improving optical properties such as transparency, the substrateless pressure-sensitive adhesive sheet (substrateless double-sided pressure-sensitive adhesive sheet) is preferable, and the substrateless double-sided pressure-sensitive adhesive sheet consisting of the pressure-sensitive adhesive layer of the present invention is more preferable. A separator (release liner) which is peeled off at the use (lamination) of the pressure-sensitive adhesive sheet is not included in the "substrate (substrate layer)" above.

[Pressure-Sensitive Adhesive Layer of the Present Invention]

The gel fraction of the pressure-sensitive adhesive layer of the present invention is 80 wt% (%) or less (for example, from 30 to 80 wt%), preferably from 50 to 80 wt%, more preferably from 55 to 75 wt%. This gel fraction (the percentage of the solvent insoluble component) can be determined as an ethyl acetate insoluble matter. Specifically, the gel fraction is determined as the fraction by weight of the insoluble component after dipping the pressure-sensitive adhesive layer in ethyl acetate at 23°C for 7 days, based on the pressure-sensitive adhesive layer before the dipping.

Specifically, the gel fraction is, for example, a value calculated by "Method of measuring gel fraction" to be described below.

(Method of measuring gel fraction)

About 0. 1 g of the pressure-sensitive adhesive layer is sampled from the double-sided pressure-sensitive adhesive sheet, wrapped with a porous tetrafluoroethylene sheet (trade name "NTF1122", manufactured by Nitto Denko Corporation) having an average pore size of 0.2 $\mu$m, and it is tied up with a kite string and at this time, it is measured for the weight, and the weight measured is designated as the weight before immersion. The weight before immersion is the total weight of the pressure-sensitive adhesive layer (pressure-sensitive adhesive sampled above), the tetrafluoroethylene sheet and the kite string. The total weight of the tetrafluoroethylene sheet and the kite string is also measured, and this weight is designated as the wrapper weight.

Subsequently, the pressure-sensitive adhesive layer of the present invention wrapped with a tetrafluoroethylene sheet and tied up with a kite string (hereinafter referred to as the "sample") is put in a 50 ml-volume vessel filled with ethyl acetate, followed by allowing to stand still at 23°C for 7 days. The sample (after ethyl acetate treatment) is then taken out of the vessel, and it is transferred to an aluminum-made cup, followed by drying in a dryer at 130°C for 2 hours to remove ethyl acetate, and it is measured for the weight, and this weight is designated as the weight after immersion.

The gel fraction is calculated according to the following formula:

$$\text{Gel fraction (wt\%)} = ((A\text{-}B)/(C\text{-}B)) \times 100$$

(wherein A is the weight after immersion, B is the wrapper weight, and C is the weight before immersion).

The gel fraction of the pressure-sensitive adhesive layer of the present invention is specified to be 80 wt% or less, whereby remaining of an air bubble in the interface between the pressure-sensitive adhesive sheet and the optical member after an autoclave treatment is suppressed. This effect is mainly attributable to the fact that by setting the gel fraction to 80 wt% or less, the pressure-sensitive adhesive layer is enhanced in the flexibility and in turn, easily laminated to an optical member, as a result, an air bubble can be hardly entrained in the interface between the pressure-sensitive adhesive sheet and the optical member when laminating. When the gel fraction is set to 80 wt% or less, this also produces an effect that stress relaxability of the pressure-sensitive adhesive layer is enhanced to allow for easy escape of an air bubble and therefore, an air bubble is less liable to remain after an autoclave treatment.

The gel fraction can be controlled, for example, by the used amount (content) of a polyfunctional monomer.

The content (percentage) of the component having a molecular weight of 50,000 or less in the sol matter of the pressure-sensitive adhesive layer of the present invention is 20 wt% or less (for example, from 3 to 20 wt%), preferably from 3 to 17 wt%, more preferably from 3 to 15 wt%, based on the total amount (100 wt%) of the sol matter. The term "sol matter" indicates the soluble component in extraction with chloroform of the pressure-sensitive adhesive layer. The "content of the component having a molecular weight of 50,000 or less in the sol matter" can be determined, for example, by GPC measurement (measurement of the molecular weight by the GPC method). More specifically, the content is measured, for example by the following method.

(Method for Measuring Content of Component Having Molecular Weight of 50,000 or less in Sol Matter)

About 0. 1 g of the pressure-sensitive adhesive layer is sampled from the double-sided pressure-sensitive adhesive sheet, wrapped with a porous tetrafluoroethylene sheet (trade name "NTF 1122", manufactured by Nitto Denko Corporation) having an average pore size of 0.2 $\mu$m, and it is tied up with a kite string and at this time.

Subsequently, the pressure-sensitive adhesive layer of the present invention wrapped with a tetrafluoroethylene sheet and tied up with a kite string is put in a 50 ml-volume vessel filled with chloroform, followed by allowing to stand still at 23°C for 7 days. The chloroform solution (including the sol matter extracted) is then taken out of the vessel, and it is dried under reduced pressure to volatilize the chloroform, and the sol matter is obtained.

The content of the component having a molecular weight of 50,000 or less in the sol matter above is calculated by gel permeation chromatograph (GPC) measurement. Specifically, for example, the sol matter is dissolved in tetrahydrofuran (THF) (eluent) to prepare a solution having a concentration of the sol matter of about 2.0 g/L, the solution is left standing overnight, followed by filtering through a 0.45-$\mu$m membrane filter, and the filtrate is subjected to GPC measurement using the following measuring apparatus under the following measurement conditions, whereby the content can be calculated.

GPC Measuring Apparatus:

Measuring apparatus: trade name "HLC-8120GPC" (manufactured by Tosoh Corporation)

GPC Measurement Conditions:

Column: trade name "TSKgel, Super AWM-H + super AW4000 + super AW2500" (produced by Tosoh Corporation)
Column size: each 6.0 mm I.D. × 150 mm
Eluent: Tetrahydrofuran (THF)
Flow rate: 0.4 mL/min
Detector: Reflective Index (RI) detector
Column temperature (measurement temperature): 40°C
Injection amount: 20 μL
Standard: polystyrene

In the case of containing a carboxyl group-containing monomer (for example, acrylic acid) as a constituent unit (a monomer unit constituting the acrylic polymer) of the pressure-sensitive adhesive layer of the pressure-sensitive adhesive sheet, methylation of the sample (sol matter) is performed by the following method, and the methylated sol matter is subjected to the above-described GPC measurement.

(Methylation of Sol Matter)

The sol matter is dissolved in chloroform, thereby preparing a chloroform solution of 2.0 g/L, followed by stirring overnight. Subsequently, 0.5 mL of methanol and 0.5 mL of 2.0 M trimethylsilyldiazomethane (hexane solution) are added to 10 mL of the chloroform solution prepared above, and the resulting solution is lightly shaken and left standing at room temperature for half a day. Thereafter, chloroform is volatilized by drying under reduced pressure to obtain a methylated sol matter.

In the pressure-sensitive adhesive sheet of the present invention, the content of the component having a molecular weight of 50,000 or less in the sol matter of the pressure-sensitive adhesive layer of the present invention is specified to be 20 wt% or less, whereby generation of a delayed bubble is suppressed. In this connection, it is presumed that an air bubble entrained in the interface between the pressure-sensitive adhesive sheet and the optical member when laminating is once dispersed as fine bubbles by an autoclave treatment but with the passage of time, the bubbles are again aggregated (reaggregation) and the delayed bubble above is thereby produced. If the content of the component having a molecular weight of 50,000 or less in the sol matter of the pressure-sensitive adhesive layer is large, that is, the amount of the low-molecular-weight component is large, "withdrawal" of the low-molecular-weight component in the pressure-sensitive adhesive layer (leaving of the low-molecular-weight component from the pressure-sensitive adhesive layer) is readily caused. In such a case, it is considered that the pressure-sensitive adhesive layer is liable to be lifted from the optical member due to an air bubble present in the interface between the pressure-sensitive adhesive layer and the optical member and reaggregation of bubbles is likely to occur, leading to promoted production of a delayed bubble. On the other hand, in the present invention, the content of the component having a molecular weight of 50,000 or less in the sol matter is controlled to be 20 wt% or less, and this is expected to assist in restraining the withdrawal of the low-molecular-weight component, suppressing the reaggregation of bubbles, and reducing the generation of a delayed bubble.

The content of the component having a molecular weight of 50,000 or less in the sol matter can be controlled, for example, by the used amount of a photopolymerization initiator (particularly, the amount used when forming the later-described prepolymer composition) or the illuminance of the active energy ray (particularly, ultraviolet ray) irradiated when forming a pressure-sensitive adhesive layer from the later-described pressure-sensitive adhesive composition.

The pressure-sensitive adhesive layer of the present invention includes an acrylic polymer as the essential component. The content of the acrylic polymer in the pressure-sensitive adhesive layer (100 wt%) of the present invention is not particularly limited, but in view of odor, the content is preferably from 96 to 100 wt%, more preferably from 98 to 100 wt%.

The acrylic polymer is not particularly limited but is preferably an acrylic polymer including, as the essential monomer component, an alkyl ester (meth)acrylate and/or an alkoxyalkyl ester (meth)acrylate. The "(meth)acryl" means "acryl" and/or "methacryl" (any one or both of "acryl" and "methacryl"), and the same applies to the following.

As the monomer component constituting the acrylic polymer, it is preferred to further contain a polar group-containing monomer or a polyfunctional monomer. Furthermore, a monomer other than the above-described alkyl ester (meth)acrylate, alkoxyalkyl ester (meth)acrylate, polar group-containing monomer and polyfunctional monomer (which is sometimes referred to as "the other copolymerizable monomer") may be contained as the monomer component constituting the acrylic polymer.

The alkyl ester (meth)acrylate having the linear or branched alkyl group (hereinafter, simply referred to as "alkyl ester (meth)acrylate in some cases) may include, for example, alkyl ester (meth)acrylate having 1 to 20 carbon atoms such as methyl (meth)acrylate, ethyl (meth)acrylate, propyl (meth)acrylate, isopropyl (meth)acrylate, butyl (meth)acrylate (n-butyl (meth)acrylate, isobutyl (meth)acrylate, s-butyl (meth)acrylate, t-butyl (meth)acrylate), pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth) acrylate, hexadecyl (meth)acrylate, heptadecyl (meth)acrylate, octadecyl (meth)acrylate, nonadecyl (meth)acrylate and eicosyl (meth)acrylate. The alkyl ester (meth)acrylate may be used alone or in combination of two or more thereof. Among these, in view of low Tg, 2-ethylhexyl acrylate (2EHA), isooctyl acrylate (i-OA), and butyl acrylate (BA) are preferred.

Examples of the alkoxyalkyl ester (meth)acrylate may include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate and 4-ethoxybutyl (meth)acrylate. The alkoxyalkyl ester (meth)arylate may be used alone or in combination of two or more thereof. Among these, an alkoxyalkyl ester acrylate is preferred.

The content of the alkyl ester (meth)acrylate and/or alkoxyalkyl ester (meth)acrylate is preferably from 50 to 98 wt%, more preferably from 50 to 95 wt%, based on the total amount (100 wt%) of monomer components constituting the acrylic polymer. By setting the content to 50 wt% or more, the stress relaxability is enhanced and remaining of an air bubble after an autoclave treatment or generation of a delayed bubble is suppressed. If the content is 98 wt% or more, the adhesive force may be decreased and generation of a delayed bubble may readily occur. In the case where both alkyl ester (meth)acrylate and alkoxyalkyl ester (meth)acrylate are used as the monomer component, the total amount (total content) of the content of alkylester(meth)acrylate and the content of alkoxyalkylester(meth)acrylate may be within the above range.

Examples of the polar group-containing monomer include a carboxyl group-containing monomer (including an acid anhydride-containing monomer such as maleic anhydride) such as (meth)acrylic acid, itaconic acid, maleic acid, fumaric acid, crotonic acid, and isocrotonic acid; a hydroxyl group-containing monomer such as hydroxyalkyl (meth) acrylate (e.g., 2-hydroxyethyl (meth)acrylate, 3-hydroxypropyl (meth)acrylate, 4-hydroxybutyl (meth)acrylate, 6-hydroxyhexyl (meth)acrylate), vinyl alcohol, and allyl alcohol; an amide group-containing monomer such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; an amino group-containing monomer such as aminoethyl (meth)acrylate, dimethylaminoethyl (meth)acrylate, and t-butylaminoethyl (meth)acrylate; an epoxy group-containing monomer such as glycidyl (meth)acrylate and methyl glycidyl (meth)acrylate; a cyano group-containing monomer such as acrylonitrile and methacrylonitrile; a heterocyclic ring-containing vinyl monomer such as N-vinyl-2-pyrrolidone, (meth) acryloyl morpholine, vinylpyridine, N-vinylpiperidone, vinylpyrimidine, N-vinylpiperazine, N-vinylpyrrole, N-vinylimidazole, and vinyloxazole; a sulfonic acid group-containing monomer such as sodium vinylsulfonate; a phosphoric acid group-containing monomer such as 2-hydroxyethylacryloyl phosphate; an imide group-containing monomer such as cyclohexylmaleimide and isopropylmaleimide; and an isocyanate group-containing monomer such as 2-methacryloyloxyethyl isocyanate. One of these polar group-containing monomers may be used alone, or two or more thereof may be used in combination. Among these, in view of pressure-sensitive adhesive characteristics to glass, a carboxyl group-containing monomer, an amide group-containing monomer and a hydroxyl group-containing monomer are preferred, and acrylic acid (AA), N-vinyl-2-pyrrolidone (NVP), 2-hydroxyethyl acrylate (HEA), 4-hydroxybutyl acrylate (4HBA) and N-hydroxyethylacrylamide (HEAA) are more preferred.

The content of the polar group-containing monomer is preferably from 2 to 50 wt%, more preferably from 5 to 50 wt%, based on the total amount (100 wt%) of monomer components constituting the acrylic polymer. By setting the content to 2 wt% or more, the pressure-sensitive adhesive force is increased and generation of a delayed bubble is suppressed. On the other hand, by setting the content to 50 wt% or less, the stress relaxability is enhanced, and remaining of an air bubble after an autoclave treatment or generation of a delayed bubble is reduced.

The polyfunctional monomer means a monomer having two or more ethylenically unsaturated groups per molecule. The ethylenically unsaturated group is not particularly limited, but examples thereof include a radical polymerizable functional group such as vinyl group, propenyl group, isopropenyl group, vinyl ether group (vinyloxy group) and allyl ether group (allyloxy group). The above-described alkyl ester (meth)acrylate, alkoxyalkyl ester (meth)acrylate, polar group-containing monomer and other copolymerizable monomer are a monomer having only one ethylenically unsaturated group per molecule (monofunctional monomer).

As the polyfunctional monomer, examples thereof include hexanediol di(meth)acrylate, butanediol di(meth) acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxyacrylate, polyester acrylate and urethane acrylate. The polyfunctional monomer may be used alone or in combination of two or more thereof. Among these, in view of stress relaxability, dipentaerythritol hexaacrylate (DPHA) is preferred.

The content (amount used) of the polyfunctional monomer is not particularly limited but is preferably from 0.01 to 0.3 wt%, more preferably from 0.03 to 0.15 wt%, based on the total amount (100 wt%) of monomer components constituting the acrylic polymer. If the content is less than 0.01 wt%, crosslinking may not proceed, resulting in low pressure-sensitive adhesive force, and a delayed bubble may be readily generated. By setting the content to 0.3 wt% or less, the stress relaxability is enhanced, and remaining of an air bubble or generation of a delayed bubble is reduced.

As the other copolymerizable monomer, examples thereof include (meth)acrylate other than the above described alkylester (meth)acrylate, polar group-containing monomer, and functional monomer, such as (meth)acrylate having an alicyclic hydrocarbon group such as cyclopentyl (meth)acrylate, cyclohexyl (meth)acrylate and isobornyl (meth) acrylate, and (meth)acrylate having an aromatic hydrocarbon group such as phenyl(meth)acrylate, phenoxyethyl(meth) acrylate and benzyl(meth)acrylate; vinyl esters such as vinyl acetate and vinyl propionate; aromatic vinyl compounds such as styrene and vinyl toluene; olefins or dienes such as ethylene, butadiene, isoprene and isobutylene; vinyl ethers such as vinylalkyl ether; and vinyl chloride.

The pressure-sensitive adhesive layer of the present invention preferably contains a silane coupling agent. Thanks to the silane coupling agent, adhesiveness to glass is enhanced, and generation of a display bubble particularly when laminating to glass is suppressed. The expression "containing a silane coupling agent" as used herein includes not only containing a silane coupling agent itself but also containing a silane coupling agent in the state of being bonded to a constituent component (for example, an acrylic polymer) of the pressure-sensitive adhesive layer. The silane coupling agent is not particularly limited, but γ-glycidoxypropyltrimethoxysilane, γ-glycidoxypropyltriethoxysilane, γ-aminopropyltrimethoxysilane and N-phenyl-aminopropyltrimethoxysilane are preferably exemplified. Among them, γ-glycidoxypropyltrimethoxysilane is preferable. The silane coupling agent may be used alone or in combination of two or more thereof. As the silane coupling agent, for example, a commercially available product such as trade name "KBM-403" (manufactured by Shin-Etsu Chemical Co., Ltd.) may be used.

The content of the silane coupling agent is not particularly limited, but from the standpoint of enhancing the adhesiveness to glass and thereby suppressing the generation of a delayed bubble, the content is preferably from 0.01 to 1.0 parts by weight, more preferably from 0.05 to 0.5 parts by weight, based on the total amount (100 parts by weight) of monomer components constituting the acrylic polymer.

Furthermore, the pressure-sensitive adhesive layer of the present invention may contain, if desired, known additives such as crosslinking agent (for example, an isocyanate-based crosslinking agent and an epoxy-based crosslinking agent), crosslinking accelerator, tackifying resin (for example, a rosin derivative, a polyterpene resin, a petroleum resin and an oil-soluble phenol), anti-aging agent, filler, colorant (e.g., pigment, dye), ultraviolet absorber, antioxidant, chain transfer agent, plasticizer, softener, surfactant and antistatic agent, within the range not impairing the characteristics of the present invention.

The particularly preferred specific configuration of the pressure-sensitive adhesive layer of the present invention includes, for example, the following pressure-sensitive adhesive layer (1) or (2), but the present invention is not limited thereto.

(1) An acrylic pressure-sensitive adhesive layer including an acrylic polymer composed of monomer components containing from 84 to 94 wt% of 2-ethylhexyl acrylate (2EHA), from 5 to 15 wt% of acrylic acid (AA), and from 0.03 to 0.15 wt% of dipentaerythritol hexaacrylate (DPHA), based on the total amount (100 wt%) of monomer components constituting the acrylic polymer.

(2) An acrylic pressure-sensitive adhesive layer including an acrylic polymer composed of monomer components containing from 84 to 94 wt% of isooctyl acrylate (i-OA), from 5 to 15 wt% of acrylic acid (AA), and from 0.03 to 0.15 wt% of dipentaerythritol hexaacrylate (DPHA), based on the total amount (100 wt%) of monomer components constituting the acrylic polymer.

The thickness of the pressure-sensitive adhesive layer of the present invention is not particularly limited but is preferably from 25 to 500 μm, more preferably from 75 to 350 μm. By setting the thickness to 25 μm or more, a step such as height difference due to printing is easily absorbed and therefore, remaining of an air bubble after an autoclave treatment tends to be prevented from occurring. On the other hand, by setting the thickness to 500 μm or less, holding an excellent appearance as an optical pressure-sensitive adhesive sheet is facilitated.

The haze (in accordance with JIS K7136) of the pressure-sensitive adhesive layer of the present invention is not particularly limited but is preferably 3.0% or less, more preferably 1.5% or less. By setting the haze to 3.0% or less, the optical product or optical member laminated keeps good transparency or appearance. The haze can be measured by using a haze meter (manufactured by Murakami Color Research Laboratory, trade name "HM-150") by laminating the pressure-sensitive adhesive layer of the present invention to, for example, a slide glass (for example, total light transmittance of 91.8% and haze of 0.4%).

The total light transmittance (in accordance with JIS K7361-1) in the visible wavelength region of the pressure-sensitive adhesive layer of the present invention is not particularly limited but is preferably 87% or more, more preferably 89% or more. By setting the total light transmittance to 87% or more, the optical product or optical member laminated keeps good transparency or appearance. The total light transmittance can be measured by using a haze meter (manufactured by Murakami Color Research Laboratory, trade name "HM-150") by laminating the pressure-sensitive adhesive layer of the present invention to, for example, a slide glass (for example, total light transmittance of 91.8% and haze of 0.4%).

[Other pressure-sensitive adhesive layer]

In the case where the pressure-sensitive adhesive sheet of the present invention include the other pressure-sensitive adhesive layer (the pressure-sensitive adhesive layer other than the pressure-sensitive adhesive layer of the present invention), the other pressure-sensitive adhesive layer may include, but not particularly limited to, for example, a known/general pressure-sensitive adhesive layer that is formed of a known pressure-sensitive adhesive such as a urethane-based pressure-sensitive adhesive, an acrylic pressure-sensitive adhesive, a rubber-based pressure-sensitive adhesive, a silicon-based pressure-sensitive adhesive, a polyester-based pressure-sensitive adhesive, a polyamide-based pressure-sensitive adhesive, an epoxy-based pressure-sensitive adhesive, a vinyl alkyl ether-based pressure-sensitive adhesive, and a fluorine-based pressure-sensitive adhesive. The pressure-sensitive adhesive may be used either alone or in combination of two or more thereof.

[Substrate]

The pressure-sensitive adhesive sheet of the present invention may include a substrate as described above (i.e., the pressure-sensitive adhesive sheet with substrate). The substrate is not particularly limited, but may be various optical films such as a plastic film, an antireflection (AR) film, a polarizing plate, and a retardation film. Materials of the plastic film may be, for example, plastic material such as polyester resins such as polyethylene terephthalate (PET); acrylic resins such as polymethyl methacrylate (PMMA); polycarbonate; triacetyl celluous (TAC); polysulfone; polyarylate; polyimide; polyvinyl chloride; polyvinyl acetate; polyethylene; polypropylene; ethylene propylene copolymer; and cyclic olefin polymer such as trade name "ARTON (cyclic olefin polymer; manufactured by JSR)", trade name "ZEONOR (cyclic olefin polymer; manufactured by Nippon Zeon Co., Ltd.)". The plastic materials may be used alone or in combination of two or more thereof. The "substrate" is a part laminated to an adherend together with the pressure-sensitive adhesive layer, when the pressure-sensitive adhesive sheet is laminated to the adherend (such as an optical member). The separator (release liner) released in the use (lamination) of the pressure-sensitive adhesive sheet is not included in the "substrate".

Among them, the substrate is preferably a transparent substrate. The total light transmittance of the substrate in a visible light wavelength region (in accordance with JIS K7361-1) is not particularly limited, but is preferably 85% or more, and more preferably 88% or more. A haze of the substrate (in accordance with JIS K7136) is not particularly limited, but is preferably 1.5% or less, and more preferably 1.0% or less. The transparent substrate may be a PET film or a non-oriented film such as trade name "ARTON", and trade name "Zeonoa".

The thickness of the substrate is not particularly limited, but is preferably from 12 to 75 μm. The substrate may have a single layer or multilayer shape. On the surface of the substrate, for example, a known/general surface treatment such as a physical treatment such as a corona discharge treatment and a plasma treatment and a chemical treatment such as a basecoat treatment, may be properly preformed.

[Optical Pressure-Sensitive Adhesive Sheet]

The pressure-sensitive adhesive sheet of the present invention is sufficient and not particularly limited as long as it has at least the pressure-sensitive adhesive layer of the present invention, but as described above, a pressure-sensitive adhesive sheet consists of the pressure-sensitive adhesive layer of the present invention (a substrateless type double-sided pressure-sensitive adhesive sheet) is preferred. The pressure-sensitive adhesive sheet of the present invention may have other layers (for example, an intermediate layer and an undercoat layer) within the range not impairing the effects of the present invention, in addition to the pressure-sensitive adhesive layer of the present invention, the other pressure-sensitive adhesive layer and the substrate.

The pressure-sensitive adhesive surface of the pressure-sensitive adhesive sheet of the present invention may be protected by the separator (release liner) until it is used. In the case where the pressure-sensitive adhesive sheet of the present invention is a double-sided pressure-sensitive adhesive sheet, each pressure-sensitive adhesive surface may be protected by using separators, respectively, or protected in such a way that the surface is wound in a roll form by using one separator of which both sides are release surfaces. The separator is used as a protective material of the pressure-sensitive adhesive layer, and peeled when the pressure-sensitive adhesive layer is laminated to the adherend. In the case where the pressure-sensitive adhesive sheet of the present invention is a substrateless pressure-sensitive adhesive sheet, the separator functions as a support of the pressure-sensitive adhesive layer. The separator may not be provided. Any known release paper may be used as a separator. The separator may be, but not particularly limited to, for example, a substrate having a release treated layer, a low adhesive substrate composed of a fluorine polymer, or a low adhesive substrate composed of a non-polar polymer. As the substrate having the release treated layer, examples thereof include a plastic film or paper whose surface is treated by a release agent such as silicon type, long-chaine alkyl type, fluorine type, and molybdenum sulfide. As the fluorine-based polymer in the low adhesive substrate composed of fluorine polymer, examples thereof include polytetrafluoroethylene, polychlorotrifluoroethylene, polyvinyl fluoride, polyvinylidene fluoride, a tetrafluoroethylene-hexafluoropropylene copolymer and a chlorofluoroethylene-vinylidene fluoride copolymer. As the non-polar polymer, examples thereof include an olefine-based resin (for example, polyethylene, polypropylene and the like). The separator can be formed by using a known/general method. The thickness of the separator is not particularly limited.

The thickness (total thickness) of the pressure-sensitive adhesive sheet of the present invention is not particularly limited but is preferably from 25 to 500 $\mu$m, more preferably from 75 to 350 $\mu$m. When the thickness is 25 $\mu$m or more, a height difference due to printing is readily absorbed and therefore, remaining of an air bubble after an autoclave treatment tends to be suppressed. On the other hand, when the thickness is 500 $\mu$m or less, holding an excellent appearance as an optical pressure-sensitive adhesive sheet is facilitated. The thickness of the pressure-sensitive adhesive sheet of the present invention does not include the thickness of the separator provided on the pressure-sensitive adhesive surface and, for example, in the case where the pressure-sensitive adhesive sheet of the present invention is a double-sided pressure-sensitive adhesive sheet, the thickness indicates the thickness from one pressure-sensitive adhesive surface to another pressure-sensitive adhesive surface.

The haze (in accordance with JIS K7136) of the pressure-sensitive adhesive sheet of the present invention is not particularly limited but is preferably 3.0% or less, more preferably 1.5% or less. By setting the haze to 3.0% or less, the optical member or optical product laminated keeps good transparency or appearance. The haze above can be measured using a haze meter (trade name "HM-150", manufactured by Murakami Color Research Laboratory Co., Ltd.), for example, in the case where the pressure-sensitive adhesive sheet has a separator, by peeling off the separator and laminating the sheet to a slide glass (for example, having a total light transmittance of 91.8% and a haze of 0.4%).

The total light transmittance (in accordance with JIS K7361-1) in the visible wavelength region of the pressure-sensitive adhesive sheet of the present invention is not particularly limited but is preferably 87% or more, more preferably 89% or more. By setting the total light transmittance to 87% or more, the optical member or optical product laminated keeps good transparency or appearance. The total light transmittance above can be measured using a haze meter (trade name "HM-150", manufactured by Murakami Color Research Laboratory Co., Ltd.), for example, in the case where the pressure-sensitive adhesive sheet has a separator, by peeling off the separator and laminating the sheet to a slide glass (for example, having a total light transmittance of 91.8% and a haze of 0.4%).

The 180° peeling pressure-sensitive adhesive force at 23°C to a glass sheet (referred to as a "pressure-sensitive adhesive force (23°C)") of the pressure-sensitive adhesive sheet of the present invention (the surface of the pressure-sensitive adhesive layer of the present invention in the pressure-sensitive adhesive sheet of the present invention) is not particularly limited but is preferably 5 N/20 mm or more, more preferably 8 N/20 mm or more (the upper limit is, for example, 30 N/20 mm or less). By setting the pressure-sensitive adhesive force (23°C) to 5 N/20 mm or more, generation of a delayed bubble is suppressed. The pressure-sensitive adhesive force (23°C) above can be measured by performing a 180° peel test (in accordance with JIS Z0237 (2000), tensile speed: 300 mm/min) using a glass sheet as the adherend at 23°C. In the case where the pressure-sensitive adhesive sheet of the present invention is a double-sided pressure-sensitive adhesive sheet, the measurement can be performed by laminating a backing material (for example, a PET film of 25 $\mu$m in thickness) to the pressure-sensitive adhesive surface on the side opposite the measurement surface (pressure-sensitive adhesive surface on the glass sheet side).

The pressure-sensitive adhesive force (23°C) of the pressure-sensitive adhesive sheet of the present invention can be controlled, for example, by the molecular weight of the sol matter (for example, the content of the component having a molecular weight of 50,000 or less in the sol matter).

The 180° peeling pressure-sensitive adhesive force at 80°C to a glass sheet (referred to as a "pressure-sensitive adhesive force (80°C)") of the pressure-sensitive adhesive sheet of the present invention (the surface of the pressure-sensitive adhesive layer of the present invention in the pressure-sensitive adhesive sheet of the present invention) is not particularly limited but is preferably from 3 to 25 N/10 mm, more preferably from 5 to 25 N/10 mm. By setting the pressure-sensitive adhesive force (80°C) to 3 N/10 mm or more, generation of a delayed bubble is suppressed. The pressure-sensitive adhesive force (80°C) above can be measured by performing a 180° peel test (in accordance with JIS Z0237 (2000), tensile speed: 60 mm/min) using a glass sheet as the adherend at 80°C. In the case where the pressure-sensitive adhesive sheet of the present invention is a double-sided pressure-sensitive adhesive sheet, the measurement can be performed by laminating a backing material (for example, a PET film of 25 μm in thickness) to the pressure-sensitive adhesive surface on the side opposite the measurement surface (pressure-sensitive adhesive surface on the glass sheet side).

The conventional optical pressure-sensitive adhesive sheet has a problem that even in the case of applying an autoclave treatment so as to remove an air bubble entrained in the interface between the pressure-sensitive adhesive sheet and the optical member when laminating, the air bubble still remains particularly when the stress relaxability of the pressure-sensitive adhesive layer of the pressure-sensitive adhesive sheet is low. Furthermore, there is also a problem that even when the air bubble is once removed by the autoclave treatment, an air bubble (delayed bubble) is again generated with the passage of time.

With respect to this problem, in the pressure-sensitive adhesive sheet of the present invention, the gel fraction of the pressure-sensitive adhesive layer of the present invention is controlled to be 80 wt% or less and therefore, the sheet exhibits excellent stress relaxability, as a result, remaining of an air bubble after an autoclave treatment is suppressed. Also, in the pressure-sensitive adhesive sheet of the present invention, the content of the component having a molecular weight of 50,000 or less in the sol matter of the pressure-sensitive adhesive layer of the present invention is controlled to be 20 wt% or less and therefore, generation of a delayed bubble is suppressed.

[Production Method of Pressure-Sensitive Adhesive Sheet of the Present Invention]

The pressure-sensitive adhesive layer (the pressure-sensitive adhesive layer of the present invention) in the pressure-sensitive adhesive sheet of the present invention is a pressure-sensitive adhesive layer formed by active energy ray polymerization. Accordingly, the production method of the pressure-sensitive adhesive sheet of the present invention includes at least a step of forming a pressure-sensitive adhesive layer by the active energy ray polymerization. Specifically, for example, the production method of the pressure-sensitive adhesive sheet of the present invention preferably includes at least a step of applying (coating) a composition containing monomer components constituting an acrylic polymer or their partial polymerization products and a photopolymerization initiator on an appropriate support (for example, a substrate or a separator) and irradiating the coating with an active energy ray to form a pressure-sensitive adhesive layer. That is, the pressure-sensitive adhesive layer of the present invention preferably contains a photopolymerization initiator-derived component (constituent unit).

(Photopolymerization initiator)

The photopolymerization initiator may include, but not particularly limited to, for example, a benzoin ether photopolymerization initiator, an acetophenon photopolymerization initiator, an α-ketol photopolymerization initiator, an aromatic sulfonyl chloride photopolymerization initiator, a photoactive oxime photopolymerization initiator, a benzoin photopolymerization initiator, a benzyl photopolymerization initiator, a benzophenon photopolymerization initiator, a ketal photopolymerization initiator and a thioxantone photopolymerization initiator. One of these polymerization initiators may be used alone, or two or more thereof may be used in combination.

As the benzoin ether photopolymerization initiator, examples thereof include benzoin methyl ether, benzoin ethyl ether, benzoin propyl ether, benzoin isopropyl ether, benzoin isobutyl ether, 2,2-dimethoxy-1,2-diphenylethane-1-on and anisole methyl ether. As the acetophenon photopolymerization initiator, examples thereof include 2,2-diethoxyacetophenon, 2,2-dimethoxy-2-phenylacetophenon, 1-hydroxycyclohexylphenylketone, 4-phenoxydichloroacetophenon and 4-(t-butyl)dichloroacetophenon. As the α-ketol photopolymerization initiator, examples thereof include 2-methyl-2-hydroxypropiophenon and 1-[4-(2-hydroxyethyl)phenyl]-2-methylpropane-1-on. As the aromatic sulfonyl chloride photopolymerization initiator, examples thereof include 2-naphthalenesulfonyl chloride. As the photoactive oxime photopolymerization initiator, examples thereof include 1-phenyl-1,1-propanedion-2-(o-ethoxycarbonyl)-oxime. As the benzoine photopolymerization initiator, examples thereof include benzoin. As the benzyl photopolymerization initiator, examples thereof include benzyl. As the benzophenon photopolymerization initiator, examples thereof include benzophenon, benzoylbenzoate, 3,3'-dimethyl-4-methoxybenzophenon, polyvinylbenzophenon and α-hydroxycyclohexyl phenyl ketone. As the ketal photopolymerization initiator, examples thereof include benzyl dimethyl ketal. As the thioxantone photopolymerization initiator, examples thereof include thioxantone, 2-chlorothioxantone, 2-methylthioxantone, 2, 4-dimethylthioxantone, isopropylthioxantone, 2, 4-diisopropylthioxantone and dodecylthioxantone.

(Active Energy Ray, Active Energy Ray Irradiation Apparatus)

Examples of the active energy ray include an ionizing radiation such as α-ray, β-ray, γ-ray, neutron beam and electron beam, and an ultraviolet ray. Among these, an ultraviolet is preferred. The apparatus for irradiation of the active energy ray (active energy ray irradiation apparatus) is not particularly limited and a conventionally known or employed active energy ray irradiation apparatus may be used, but examples thereof include an ultraviolet generation lamp (UV lamp) and an EB (electron beam) irradiation apparatus. The UV lamp is preferably, for example, a high-pressure discharge lamp such as metal halide lamp and high-pressure mercury lamp, or a low-pressure discharge lamp such as chemical lamp, black light lamp and fluorescent lamp for insect collection.

(Coating Apparatus)

The composition containing the monomer components constituting the acrylic polymer or their partial polymerization products and a photopolymerization initiator may be applied (coated) by a known coating method and using a general coating device (coater), for example, a gravure roll coater, a reverse roll coater, a kiss roll coater, a dip roll coater, a bar coater, a knife coater, a spray coater, a comma coater and a direct coater.

Specific embodiments of the method for producing the pressure-sensitive adhesive sheet of the present invention are described below. However, the production method of the pressure-sensitive adhesive sheet of the present invention is not limited thereto.

(Formation of Prepolymer Composition)

First, monomer components (referred to as "the monomer component A") constituting the acrylic polymer and a photopolymerization initiator are mixed to obtain a composition (referred to as a "prepolymer forming composition"). Next, the prepolymer forming composition is irradiated with an active energy ray to partially polymerize (preliminary polymerization) the monomer component A, whereby a prepolymer composition is formed.

The monomer component A is not particularly limited but is preferably a monomer component composed of, as the essential component, an alkyl ester (meth)acrylate and/or an alkoxyalkyl ester (meth)acrylate, a polar group-containing monomer and, if desired, other copolymerizable monomers, out of the monomer components constituting the acrylic polymer.

The photopolymerization initiator when forming the prepolymer composition is not particularly limited and, for example, the above-described photopolymerization initiator may be used.

The content (amount used) of the photopolymerization initiator in the prepolymer forming composition is not particularly limited but is preferably from 0.01 to 0.5 parts by weight, more preferably from 0.05 to 0.3 parts by weight, based on the monomer component A (100 parts by weight). By setting the content of the photopolymerization initiator to 0.5 parts by weight of less, the content of the component having a molecular weight of 50,000 or less in the sol matter of the pressure-sensitive adhesive layer can be easily controlled to fall within the range above. If the content of the photopolymerization initiator is less than 0.01 parts by weight, the polymerization reaction does not proceed or scarcely proceeds, and the irradiation time of an active energy ray until forming the prepolymer composition may become long.

The time (irradiation time) for which the prepolymer forming composition is irradiated with an active energy ray (particularly, ultraviolet ray) varies depending on the monomer composition constituting the acrylic pressure-sensitive adhesive layer and is not particularly limited, but the irradiation time is, for example, preferably 90 seconds or more, more preferably 120 seconds or more. More specifically, in the case of a pressure-sensitive adhesive layer containing an acrylic polymer composed of, as the essential monomer component, 2EHA, AA and DPHA or an acrylic polymer composed of, as the essential monomer component, i-OA, AA and DPHA, the irradiation time of the active energy ray (particularly, ultraviolet ray) is preferably 120 seconds or more, more preferably 150 seconds or more, and is preferably 1,800 seconds or less, though this is not particularly limited.

The prepolymer composition is a composition where a part of the monomer component A is polymerized (active energy ray polymerization). The polymerization ratio of the prepolymer composition is not particularly limited, but from the standpoint of obtaining a handleable viscosity, the polymerization ratio is preferably from 3 to 15 wt%, more preferably from 5 to 10 wt%. The polymerization ratio of the prepolymer composition is calculated according to the following formula from the weights before and after heating (drying) when the prepolymer composition is heated at 130°C for 3 hours.

$$\text{Polymerization ratio (\%) of prepolymer composition} =$$

The weight average molecular weight (Mw) of the prepolymer composition is not particularly limited but is preferably from 1,000,000 to 10,000,000, more preferably from 2,000,000 to 10,000,000. By setting the weight average molecular weight to 1,000,000 or more, the content of the component having a molecular weight of 50,000 or less in the sol matter of the pressure-sensitive adhesive layer is easily controlled to fall within the range above, and generation of a delayed bubble is suppressed. On the other hand, by setting the weight average molecular weight to 10,000,000 or less, the optical pressure-sensitive adhesive sheet can be produced without losing the appearance as a sheet. The weight average molecular weight of the prepolymer composition can be measured by the above-described GPC measurement using the prepolymer composition as the measurement sample.

The weight average molecular weight of the prepolymer composition can be controlled mainly by the content of the photopolymerization initiator in the prepolymer forming composition and the illuminance and irradiation time of the active energy ray irradiating the prepolymer forming composition.

(Formation of Pressure-Sensitive Adhesive Composition)

Subsequently, the prepolymer composition is mixed with monomer components (referred to as "the monomer component B") constituting the acrylic polymer, a silane coupling agent and, if desired, a photopolymerization initiator to form a pressure-sensitive adhesive composition. In the specification of the present invention, the term "pressure-sensitive adhesive composition" means a "composition for forming a pressure-sensitive adhesive layer".

The monomer component B is not particularly limited but, from the standpoint of controlling the gel fraction, is preferably a monomer component composed of, as the essential component, a polyfunctional monomer out of the monomer components constituting the acrylic polymer.

As the photopolymerization initiator when forming the pressure-sensitive adhesive composition, for example, the above-described photopolymerization initiator may be used. The content (amount used) of the photopolymerization initiator in the pressure-sensitive adhesive composition is not particularly limited, but from the standpoint of controlling the content of the component having a molecular weight of 50,000 or less in the sol matter, the content is preferably from 0 to 0.15 parts by weight, more preferably from 0 to 0.1 parts by weight, based on the monomer component A (100 parts by weight).

(Formation of Pressure-Sensitive Adhesive Layer and Pressure-Sensitive Adhesive Sheet)

The pressure-sensitive adhesive composition is applied (coated) on an appropriate support, followed by irradiating with an active energy ray to form a pressure-sensitive adhesive layer.

Examples of the support include a separator and a substrate. In the case where the pressure-sensitive adhesive sheet of the present invention is a pressure-sensitive adhesive sheet consists of the pressure-sensitive adhesive layer of the present invention (substrateless pressure-sensitive adhesive sheet), for example, the pressure-sensitive adhesive composition is coated on a separator to form a pressure-sensitive adhesive layer, whereby the pressure-sensitive adhesive sheet of the present invention is obtained. On the other hand, in the case where the pressure-sensitive adhesive sheet is a pressure-sensitive adhesive sheet with substrate, the pressure-sensitive adhesive sheet of the present invention may be obtained, for example, by coating the pressure-sensitive adhesive composition on a substrate to form a pressure-sensitive adhesive layer (direct method), or the pressure-sensitive adhesive sheet of the present invention may be obtained by coating the pressure-sensitive adhesive composition on a separator to form a pressure-sensitive adhesive layer and laminating the formed pressure-sensitive adhesive layer to a substrate (transfer method).

The illuminance of the active energy ray (particularly, ultraviolet ray) irradiating the pressure-sensitive adhesive composition is not particularly limited but is preferably from 1 to 19 m W/cm$^2$, more preferably from 1 to 15 mW/cm$^2$. By setting the illuminance of the active energy ray to this range, the content of the component having a molecular weight of 50,000 or less in the sol matter of the pressure-sensitive adhesive layer is easily controlled to fall within the range above.

The content (amount used) of the photopolymerization initiator during the formation of the prepolymer composition and the illuminance of the active energy ray irradiating the pressure-sensitive adhesive composition, which are employed in the production method of the pressure-sensitive adhesive sheet of the present invention, are usually not selected in the production of the conventional pressure-sensitive adhesive sheet in view of productivity. In the production of the pressure-sensitive adhesive sheet of the present invention, it is revealed that by controlling the content of the photopolymerization initiator and the illuminance of the active energy ray to fall within the ranges above, the effects of reducing the content of the component having a molecular weight of 50,000 or less (low-molecular-weight component) in the sol matter of the pressure-sensitive adhesive layer and suppressing the generation of a delayed bubble are obtained.

As described above, the pressure-sensitive adhesive sheet of the present invention can be produced by irradiating a prepolymer forming composition containing monomer components constituting an acrylic polymer and a photopolymerization initiator with an active energy ray to obtain a prepolymer composition, adding monomer components constituting an acrylic polymer and, if desired, a photopolymerization initiator to the prepolymer composition to obtain a pressure-sensitive adhesive composition, coating the pressure-sensitive adhesive composition on a support, and irradiating the composition with an active energy ray to form a pressure-sensitive adhesive layer. In this way, the pressure-sensitive adhesive sheet of the present invention can be produced without employing an operation of once obtaining an acrylic polymer constituting a pressure-sensitive adhesive layer and then removing the low-molecular-weight component from the acrylic polymer, and therefore, the pressure-sensitive adhesive sheet of the present invention is excellent in the productivity.

The pressure-sensitive adhesive sheet of the present invention is an optical pressure-sensitive adhesive sheet used for optical applications. More specifically, the pressure-sensitive adhesive sheet is an optical pressure-sensitive adhesive sheet used, for example, when laminating an optical member (optical member lamination) or when manufacturing an optical product. Above all, the pressure-sensitive adhesive sheet of the present invention is preferably a pressure-sensitive adhesive sheet for optical member lamination.

The optical member refers to a member having an optical characteristic (for example, a polarized property, a photorefractive property, a light scattering property, a light reflective property, a light transmitting property, a light absorbing property, a light diffractive property, an optical rotation property and visibility). The optical member is not particularly limited so long as the optical member is the member having the optical characteristic, but examples thereof includes a member constituting a device (optical device) such as display device (image display device) and input device, and a member used for such a device. The specific examples thereof include a polarizing plate, a wave plate, a retardation plate, an optical compensation film, a brightness enhancing film, a light guide plate, a reflective film, an anti-reflective film, a transparent conductive film (e.g. ITO film), a design film, a decoration film, a surface protective film, a prism, lens, a color filter, a transparent substrate, and a member in which these are laminated (collectively referred to as "a functional film" in some cases). Each of the "plate" and the "film" include a plate shape, a film shape, and a sheet shape, and for example, the "polarizing film" includes a "polarizing plate" and a "polarizing sheet".

As the display device, examples thereof include a liquid crystal display device, an organic EL (electroluminescence) display device, a PDP (plasma display panel), and an electronic paper. As the input device, examples thereof include a touch panel.

The optical member is not particularly limited, but examples thereof include a member (for example, a sheet-like, film-like or plate-like member) composed of glass, acrylic resin, polycarbonate, polyethylene terephthalate or metal thin film. The term "optical member" as used in the present invention includes, as described above, a member (for example, a design film, a decorative film, or a surface protective film) undertaking a role of decoration or protection while keeping the visibility of a display device or an input device as the adherend.

The pressure-sensitive adhesive sheet of the present invention is preferably used for laminating a glass-made member (for example, a glass-made optical member such as glass substrate, ITO-deposited glass and glass-made window lens). Above all, the pressure-sensitive adhesive sheet of the present invention can be preferably used as a pressure-sensitive adhesive sheet for laminating glass-made members (particularly, optical members) with each other (pressure-sensitive adhesive sheet for glass lamination). The pressure-sensitive adhesive sheet of the present invention can exert the effect of the present invention (suppressing the remaining of an air bubble after an autoclave treatment and the generation of a delayed bubble) particularly when laminating glass-made members (particularly, optical members) with each other, where entrainment of an air bubble in the interface is readily involved due to high rigidity.

The embodiment of optical member lamination using the pressure-sensitive adhesive sheet of the present invention is not particularly limited but may be, for example, (1) an embodiment where optical members are laminated with each other through the pressure-sensitive adhesive sheet of the present invention, (2) an embodiment where an optical member is laminated to a member other than an optical member through the pressure-sensitive adhesive sheet of the present invention, or (3) an embodiment where the pressure-sensitive adhesive sheet of the present invention containing an optical member is laminated to an optical member or a member other than an optical member. In the embodiment (3) above, the pressure-sensitive adhesive sheet of the present invention is preferably a double-sided pressure-sensitive adhesive sheet where the substrate is an optical member (for example, an optical film).

Examples

The present invention is described in greater detail below by referring to Examples, but the present invention is not limited to these Examples.

Example 1:

(Formation of Prepolymer Composition)

A monomer mixture obtained by mixing 90 parts by weight of 2-ethylhexyl acrylate (2EHA) and 10 parts by weight of acrylic acid (AA) was blended with 0.1 parts by weight of "IRGACURE 651" (trade name, produced by Ciba Specialty Chemicals) as the photopolymerization initiator, and the resulting mixture was irradiated with an ultraviolet ray at an illuminance of 5.0 mW/cm$^2$ for 120 seconds by using a black light (manufactured by Toshiba Corp.) until the viscosity (BH viscometer No. 5 rotor, 10 rpm, measurement temperature: 30°C) became about 20 Pa.s, whereby a prepolymer composition (polymerization ratio: 7%) in which a part of the monomer components above was polymerized was formed (prepared). The weight average molecular weight of the prepolymer composition was $6.84 \times 10^6$.

(Formation of Pressure-Sensitive Adhesive Composition)

To the prepolymer composition (100 parts by weight) prepared above, 0.07 parts by weight of dipentaerythritol hexaacrylate (DPHA) (trade name "KAYARAD DPHA", produced by Nippon Kayaku Co., Ltd.), 0.3 parts by weight of a silane coupling agent (trade name "KBM-403", produced by Shin-Etsu Chemical Co., Ltd.) and 0.04 parts by weight of "IRGACURE 651" (trade name, produced by Ciba Specialty Chemicals) were added, followed by mixing to form (prepare) a pressure-sensitive adhesive composition (active energy ray-curable pressure-sensitive adhesive composition).

(Formation of Pressure-Sensitive Adhesive Sheet (Pressure-Sensitive Adhesive Layer))

The pressure-sensitive adhesive composition prepared above was applied (coated) on a polyethylene terephthalate separator (PET separator) (trade name "MRF75", produced by Mitsubishi Plastics Industries, Ltd.) to form a coating layer (thickness of coating layer: 175 $\mu$m). Subsequently, a PET separator ("MRF38", produced by Mitsubishi Plastics Industries, Ltd.) was provided on the coating layer formed above to cover the coating layer, thereby blocking oxygen. Thereafter, the lamination of "MRF75/coating layer/MRF38" was irradiated from above (MRF38 side) with an ultraviolet ray at an illuminance of 8 mW/cm$^2$ for 100 seconds by using a black light (manufactured by Toshiba Corp.), followed by subjecting to a drying treatment in a drier at 130°C for 2 minutes to form an acrylic pressure-sensitive adhesive layer, whereby a double-sided pressure-sensitive adhesive sheet (substrateless double-sided pressure-sensitive adhesive sheet) having a thickness of 175 $\mu$m was produced.

Example 2:

A double-sided pressure-sensitive adhesive sheet (substrateless double-sided pressure-sensitive adhesive sheet) having a thickness of 175 $\mu$m was obtained in the same manner as in Example 1 except for changing the blending amount of dipentaerythritol hexaacrylate (DPHA) to 0.05 parts by weight per 100 parts by weight of the prepolymer composition. In the prepolymer composition of Example 2, the polymerization ratio was 7.0% and the weight average molecular weight was $6.84 \times 10^6$.

Example 3:

A double-sided pressure-sensitive adhesive sheet (substrateless double-sided pressure-sensitive adhesive sheet) having a thickness of 175 $\mu$m was obtained in the same manner as in Example 1 except for changing, as shown in Table 1, the monomer mixture used during the formation of the prepolymer composition to a monomer mixture obtained by mixing 86 parts by weight of 2-ethylhexyl acrylate (2EHA) and 14 parts by weight of acrylic acid (AA). In the prepolymer composition of Example 3, the polymerization ratio was 7.5% and the weight average molecular weight was $7.11 \times 10^6$.

Example 4:

A double-sided pressure-sensitive adhesive sheet (substrateless double-sided pressure-sensitive adhesive sheet) having a thickness of 175 $\mu$m was obtained in the same manner as in Example 1 except that, as shown in Table 1, the monomer mixture used during the formation of the prepolymer composition was changed to a monomer mixture obtained by mixing 80 parts by weight of 2-ethylhexyl acrylate (2EHA), 11.5 parts by weight of 2-methoxyethyl acrylate (2MEA), 7 parts by weight of N-vinyl-2-pyrrolidone (NVP) and 1.5 parts by weight of N-hydroxyethylacrylamide (HEAA), the irradiation time of ultraviolet ray during the formation of the prepolymer composition was changed to 250 seconds, the blending amount of dipentaerythritol hexaacrylate (DPHA) was changed to 0.05 parts by weight per 100 parts by weight of the prepolymer composition, and "IRGACURE 651 " (trade name, produced by Ciba Specialty Chemicals) was not blended during the formation of the pressure-sensitive adhesive composition. In the prepolymer composition of Example 4, the polymerization ratio was 6.8% and the weight average molecular weight was $5.21 \times 10^6$.

Example 5:

A double-sided pressure-sensitive adhesive sheet (substrateless double-sided pressure-sensitive adhesive sheet) having a thickness of 175 $\mu$m was obtained in the same manner as in Example 1 except that, as shown in Table 1, the monomer mixture used during the formation of the prepolymer composition was changed to a monomer mixture obtained by mixing 57 parts by weight of butyl acrylate (BA), 12 parts by weight of cyclohexyl acrylate (CHA), 23 parts by weight of 4-hydroxybutyl acrylate (4HBA) and 8 parts by weight of 2-hydroxyethyl acrylate (HEA), the irradiation time of ultraviolet ray during the formation of the prepolymer composition was changed to 330 seconds, and the blending amount of dipentaerythritol hexaacrylate (DPHA) was changed to 0.05 parts by weight per 100 parts by weight of the prepolymer composition. In the prepolymer composition of Example 5, the polymerization ratio was 7.5% and the weight average molecular weight was $3.34 \times 10^6$.

Example 6:

A double-sided pressure-sensitive adhesive sheet (substrateless double-sided pressure-sensitive adhesive sheet) having a thickness of 175 μm was obtained in the same manner as in Example 1 except that, as shown in Table 1, the monomer mixture used during the formation of the prepolymer composition was changed to a monomer mixture obtained by mixing 87 parts by weight of isooctyl acrylate (i-OA) and 13 parts by weight of acrylic acid (AA) and the blending amount of dipentaerythritol hexaacrylate (DPHA) was changed to 0.08 parts by weight per 100 parts by weight of the prepolymer composition. In the prepolymer composition of Example 6, the polymerization ratio was 7.0% and the weight average molecular weight was $6.48 \times 10^6$.

Comparative Example 1:

A double-sided pressure-sensitive adhesive sheet (substrateless double-sided pressure-sensitive adhesive sheet) having a thickness of 175 μm was obtained in the same manner as in Example 1 except that, as shown in Table 1, the monomer mixture used during the formation of the prepolymer composition was changed to a monomer mixture obtained by mixing 57 parts by weight of butyl acrylate (BA), 12 parts by weight of cyclohexyl acrylate (CHA), 23 parts by weight of 4-hydroxybutyl acrylate (4HBA) and 8 parts by weight of 2-hydroxyethyl acrylate (HEA), the irradiation time of ultraviolet ray during the formation of the prepolymer composition was changed to 330 seconds, the blending amount of dipentaerythritol hexaacrylate (DPHA) was changed to 0.1 parts by weight per 100 parts by weight of the prepolymer composition, and "IRGACURE 651 " (trade name, produced by Ciba Specialty Chemicals) was not blended during the formation of the pressure-sensitive adhesive composition. In the prepolymer composition of Comparative Example 1, the polymerization ratio was 7.5% and the weight average molecular weight was $3.34 \times 10^6$.

Comparative Example 2:

A double-sided pressure-sensitive adhesive sheet (substrateless double-sided pressure-sensitive adhesive sheet) having a thickness of 175 μm was obtained in the same manner as in Example 1 except for changing the blending amount of dipentaerythritol hexaacrylate (DPHA) to 0.13 parts by weight per 100 parts by weight of the prepolymer composition. In the prepolymer composition of Comparative Example 2, the polymerization ratio was 7.0% and the weight average molecular weight was $6.84 \times 10^6$.

Comparative Example 3:

A double-sided pressure-sensitive adhesive sheet (substrateless double-sided pressure-sensitive adhesive sheet) having a thickness of 175 μm was obtained in the same manner as in Example 1 except that the blending amount of "IRGACURE 651" (trade name, produced by Ciba Specialty Chemicals) during the formation of the prepolymer composition was changed to 0.3 parts by weight, the irradiation time of ultraviolet ray during the formation of the prepolymer composition was changed to 90 seconds, and the illuminance of ultraviolet ray irradiated during the formation of the pressure-sensitive adhesive sheet was changed to 20 mW/cm². In the prepolymer composition of Comparative Example 3, the polymerization ratio was 8.0% and the weight average molecular weight was $3.21 \times 10^6$.

Comparative Example 4:

A double-sided pressure-sensitive adhesive sheet (substrateless double-sided pressure-sensitive adhesive sheet) having a thickness of 175 μm was obtained in the same manner as in Example 1 except that, as shown in Table 1, the monomer mixture used during the formation of the prepolymer composition was changed to a monomer mixture obtained by mixing 87 parts by weight of isooctyl acrylate (i-OA) and 13 parts by weight of acrylic acid (AA), the blending amount of "IRGACURE 651" (trade name, produced by Ciba Specialty Chemicals) during the formation of the prepolymer composition was changed to 0.3 parts by weight, the irradiation time of ultraviolet ray during the formation of the prepolymer composition was changed to 90 seconds, and the illuminance of ultraviolet ray irradiated during the formation of the pressure-sensitive adhesive sheet was changed to 20 mW/cm². In the prepolymer composition of Comparative Example 4, the polymerization ratio was 7.8% and the weight average molecular weight was $2.88 \times 10^6$.

(Evaluation)

With respect to the pressure-sensitive adhesive sheets obtained in Examples and Comparative Examples, the 180° peeling pressure-sensitive adhesive force (pressure-sensitive adhesive force (23°C) and pressure-sensitive adhesive force (80°C)) was measured. Also, the pressure-sensitive adhesive sheets above were evaluated for the presence or absence of remaining of an air bubble after an autoclave treatment and the delayed bubble characteristics. Based on the evaluation results, overall judgment as an optical pressure-sensitive adhesive sheet was performed. The gel fraction of the pressure-sensitive adhesive layer in the pressure-sensitive adhesive sheet, the content of the component having a molecular weight of 50,000 or less in the sol matter, and the haze and total light transmittance of the pressure-sensitive adhesive sheet were measured by the methods described above.

(1) Pressure-Sensitive Adhesive Force (23°C)

After peeling off the separator from each of the pressure-sensitive adhesive sheets obtained in Examples and Comparative Examples, a PET film (thickness: 25 μm) as a backing was laminated to one pressure-sensitive adhesive surface and then cut into a size of 20 mm (width) × 100 mm (length) to produce a sample for evaluation. Subsequently, the pressure-sensitive adhesive surface (another pressure-sensitive adhesive surface of the pressure-sensitive adhesive sheet) of the sample for evaluation was pressure-bonded to a glass sheet (trade name "Slide Glass No. S", produced by Matsunami Glass Ind., Ltd., 50 mm (width) × 100 mm (length), thickness: 1.3 mm) by moving a rubber roller of 2 kg back and forth once over the sample, followed by aging in an atmosphere of 23°C and 50% RH for 30 minutes. Thereafter, in accordance with JIS Z0237 (2000), the 180° peeling pressure-sensitive adhesive force (unit: N/20 mm) was measured by peeling off the sample for evaluation from the glass sheet under the conditions of a tensile speed of 300 mm/min and a peel angle of 180° with use of a tensile tester (trade name "TG-1kN", manufactured by Minebea Co., Ltd.) in an atmosphere of 23°C and 50% RH. The number of tests (number n) was 3 and the average value was calculated. The result is shown in "Pressure-Sensitive Adhesive Force (23°C)" of Table 1.

(2) Pressure-Sensitive Adhesive Force (80°C)

After peeling off the separator from each of the pressure-sensitive adhesive sheets obtained in Examples and Comparative Examples, a PET film (thickness: 25 μm) as a backing was laminated to one pressure-sensitive adhesive surface and then cut into a size of 10 mm (width) × 100 mm (length) to produce a sample for evaluation. Subsequently, the pressure-sensitive adhesive surface (another pressure-sensitive adhesive surface of the pressure-sensitive adhesive sheet) of the sample for evaluation was pressure-bonded to a glass sheet (trade name "Slide Glass No. S", produced by Matsunami Glass Ind., Ltd., 50 mm (width) × 100 mm (length), thickness: 1.3 mm) by moving a rubber roller of 2 kg back and forth once over the sample, followed by aging in an atmosphere of 23°C and 50% RH for 30 minutes. Thereafter, in accordance with JIS Z0237 (2000), the 180° peeling pressure-sensitive adhesive force (unit: N/10 mm) was measured by peeling off the sample for evaluation from the glass sheet under the conditions of a tensile speed of 60 mm/min and a peel angle of 180° with use of a tensile tester (trade name "TG-1kN", manufactured by Minebea Co., Ltd.) in an atmosphere of 80°C. The number of tests (number n) was 3 and the average value was calculated. The result is shown in "Pressure-Sensitive Adhesive Force (80°C)" of Table 1.

(3) Presence or Absence of Remaining of Air Bubble After Autoclave Treatment

Each of the pressure-sensitive adhesive sheets obtained in Examples and Comparative Examples was cut into a size of 50 mm (width) × 100 mm (length), and after peeling off the separator, a glass sheet (trade name "Aoita Setsudan Hin", produced by Matsunami Glass Ind., Ltd., 50 mm (width) × 100 mm (length), thickness: 0.7 mm) was laminated to the pressure-sensitive adhesive surface on both sides thereof to produce a sample for evaluation (pressure-bonding conditions: surface pressure: 0.4 MPa, degree of vacuum: 30 Pa, lamination time: 2 seconds). Subsequently, the sample for evaluation was placed in an autoclave, followed by subjecting to an autoclave treatment under the conditions of 50°C and 0.5 MPa for 15 minutes. The sample for evaluation was then taken out of the autoclave, and the sample was observed with an eye to confirm the presence or absence of an air bubble. The rating was A when no air bubble was observed in the sample for evaluation after the autoclave treatment (no air bubble remained after autoclave treatment), and the rating was B when an air bubble was observed in the sample for evaluation after the autoclave treatment (an air bubble remained after autoclave treatment). The results are shown in "Remaining of Air Bubble After Autoclave" of Table 1.

(4) Delayed Bubble Characteristics

Each of the pressure-sensitive adhesive sheets obtained in Examples and Comparative Examples was cut into a size of 50 mm (width) × 100 mm (length), and after peeling off the separator, a glass sheet (trade name "Aoita Setsudan Hin", produced by Matsunami Glass Ind., Ltd., 50 mm (width) × 100 mm (length), thickness: 0.7 mm) was laminated to the pressure-sensitive adhesive surface on both sides thereof (pressure-bonding conditions: surface pressure: 0.4 MPa, degree of vacuum: 30 Pa, lamination time: 2 seconds). Subsequently, the laminated body was placed in an autoclave, followed by subjecting to an autoclave treatment under the conditions of 50°C and 0.5 MPa for 15 minutes to produce a sample for evaluation (5 samples were produced for each pressure-sensitive adhesive sheet).

The sample for evaluation was left standing still in an atmosphere of 23°C and 50±5% RH for 24 hours, and then, the sample was observed with an eye. Thereafter, the sample for evaluation was heated at 80°C for 24 hours, and then, the heated sample was observed with an eye. The presence or absence of an air bubble (delayed bubble) newly generated from the state before heating and the number of bubbles were confirmed, and the delayed bubble characteristics were evaluated according to the following standards.

The results are shown in "Delayed Bubble Characteristics" of Table 1.

Score 5: A delayed bubble was not generated in all of 5 samples for evaluation.

Score 4: A delayed bubble was generated in one or two of 5 samples for evaluation.

Score 3: A delayed bubble was generated in three or more of 5 samples for evaluation and the average number of delayed bubbles per sample for evaluation where the delayed bubble was generated was less than 4.

Score 2: A delayed bubble was generated in three or more of 5 samples for evaluation and the average number of delayed bubbles per sample for evaluation where the delayed bubble was generated was from 4 to less than 10.

Score 1: A delayed bubble was generated in three or more of 5 samples for evaluation and the average number of delayed bubbles per sample for evaluation where the delayed bubble was generated was 10 or more.

(5) Overall Judgment

Based on the evaluation results of "(3) Presence or Absence of Remaining of Air Bubble After Autoclave Treatment" and "(4) Delayed Bubble Characteristics'", the overall judgment of each of the pressure-sensitive adhesive sheets obtained in Examples and Comparative Examples was performed according to the following standards.

(Evaluation Standards)

A (suitable as optical pressure-sensitive adhesive sheet): Remaining of an air bubble after the autoclave treatment is not observed, and the evaluation of delayed bubble characteristics is score 4 or more.

B (unsuitable as optical pressure-sensitive adhesive sheet): Remaining of an air bubble after the autoclave treatment is observed or the evaluation of delayed bubble characteristics is less than score 4.

The results are shown in "Overall Judgment'" of Table 1.

(Table 1)

| | Monomer Composition of Prepolymer Composition | Pressure-Sensitive Adhesive Layer | | Pressure-Sensitive Adhesive Sheet | | | | | | | |
|---|---|---|---|---|---|---|---|---|---|---|---|
| | | Gel Fraction [%] | Content of Component Having Molecular Weight of 50,000 or less in Sol Matter [%] | Haze [%] | Total Light Transmittance [%] | Pressure-Sensitive Adhesive Force (23°C) [N/20 mm] | Pressure-Sensitive Adhesive Force (80°C) [N/10 mm] | Remaining of Air Bubble After Autoclave Treatment | Delayed Bubble Characteristics [score] | Overall Judgment |
| Example 1 | 2EHA/AA=90/10 | 73 | 9.2 | 0.4 | 92 | 13 | 5.5 | A | 5 | A |
| Example 2 | 2EHA/AA=90/10 | 65 | 9.7 | 0.4 | 92 | 17 | 6.1 | A | 5 | A |
| Example 3 | 2EHA/AA=86/14 | 77 | 8.9 | 0.4 | 92 | 17 | 5.8 | A | 4 | A |
| Example 4 | 2EHA/ 2MEA/NVP/ HEAA =80/11.5/7/1.5 | 70 | 13 | 0.7 | 92 | 11 | 3.5 | A | 4 | A |
| Example 5 | BA/CHA/ 4HBA/HEA =57/12/23/8 | 69 | 18 | 0.5 | 92 | 13 | 4.4 | A | 4 | A |
| Example 6 | i-OA/AA=87/13 | 75 | 17 | 0.4 | 92 | 10 | 3.0 | A | 4 | A |
| Comparative Example 1 | BA/CHA/ 4HBA/HEA =57/12/23/8 | 86 | 16 | 0.5 | 92 | 8.2 | 2.4 | B | 5 | B |
| Comparative Example 2 | 2EHA/AA=90/10 | 84 | 8.8 | 0.4 | 92 | 13 | 4.6 | B | 4 | B |
| Comparative Example 3 | 2EHA/AA=90/10 | 77 | 21 | 0.4 | 92 | 8.1 | 2.2 | A | 2 | B |
| Comparative Example 4 | i-OA/AA=87/13 | 77 | 21 | 0.4 | 92 | 7.8 | 2.3 | A | 2 | B |

Abbreviations in Table 1 are as follows.

2EHA:      2-Ethylhexyl acrylate
AA:          Acrylic acid
2MEA:      2-Methoxyethyl acrylate
NVP:        N-Vinyl-2-pyrrolidone
HEAA:      N-Hydroxyethylacrylamide
BA:          Butyl acrylate
CHA:        Cyclohexyl acrylate
4HBA:      4-Hydroxybutyl acrylate
HEA:        2-Hydroxyethyl acrylate
i-OA:        Isooctyl acrylate

As apparent from the results of Table 1, in the pressure-sensitive adhesive sheet (Examples) of the present invention, an air bubble did not remain after the autoclave treatment and generation of a delayed bubble was suppressed, revealing that the sheet is suitable as an optical pressure-sensitive adhesive sheet. On the other hand, when the gel fraction of the acrylic pressure-sensitive adhesive layer was too high (Comparative Examples 1 and 2), an air bubble remained after the autoclave treatment and when the content of the component having a molecular weight of 50,000 or less in the sol matter of the acrylic pressure-sensitive adhesive layer was too large (Comparative Examples 3 and 4), the generation of a delayed bubble was marked, revealing that all of these sheets are not suitable as an optical pressure-sensitive adhesive sheet.

While the invention has been described in detail and with reference to specific embodiments thereof, it will be apparent to one skilled in the art that various changes and modifications can be made therein without departing from the spirit and scope thereof.

This application is based on Japanese Patent Application No. 2011-013479 filed on January 25, 2011, and the entire subject matter of which is incorporated herein by reference. Also, the documents cited in the specification are incorporated herein by reference.

The invention provides the following optical pressure-sensitive adhesive sheet.

(1) An optical pressure-sensitive adhesive sheet, which comprises an acrylic pressure-sensitive adhesive layer, wherein the acrylic pressure-sensitive adhesive layer is formed by an active energy ray polymerization, a gel fraction of the acrylic pressure-sensitive adhesive layer is 80 wt% or less, and a content of a component having a molecular weight of 50,000 or less in a sol matter of the acrylic pressure-sensitive adhesive layer is 20 wt% or less.

(2) The optical pressure-sensitive adhesive sheet according to (1), wherein the acrylic pressure-sensitive adhesive layer comprises an acrylic polymer including, as an essential monomer component, an alkyl ester (meth)acrylate and/or an alkoxyalkyl ester (meth)acrylate.

(3) The optical pressure-sensitive adhesive sheet according to (1) or (2), which has a total light transmittance of 87% or more and a haze of 3.0% or less.

(4) The optical pressure-sensitive adhesive sheet according to any one of (1) to (3), which consists of the acrylic pressure-sensitive adhesive layer.

(5) The optical pressure-sensitive adhesive sheet according to any one of (1) to (4), which has a total thickness of from 25 to 500 $\mu$m.

(6) The optical pressure-sensitive adhesive sheet according to any one of (1) to (5), which is used for laminating an optical member.

(7) The optical pressure-sensitive adhesive sheet according to (6), wherein the optical member is a glass-made optical member.

## Claims

1. An optical pressure-sensitive adhesive sheet, which comprises an acrylic pressure-sensitive adhesive layer, wherein the acrylic pressure-sensitive adhesive layer is formed by an active energy ray polymerization, a gel fraction of the acrylic pressure-sensitive adhesive layer is 80 wt% or less, and a content of a component having a molecular weight of 50,000 or less in a sol matter of the acrylic pressure-sensitive adhesive layer is 20 wt% or less.

2. The optical pressure-sensitive adhesive sheet according to claim 1, wherein the acrylic pressure-sensitive adhesive layer comprises an acrylic polymer including, as an essential monomer component, an alkyl ester (meth)acrylate and/or an alkoxyalkyl ester (meth)acrylate.

3. The optical pressure-sensitive adhesive sheet according to claim 1 or 2, which has a total light transmittance of 87% or more and a haze of 3.0% or less.

4. The optical pressure-sensitive adhesive sheet according to any one of claims 1 to 3, which consists of the acrylic pressure-sensitive adhesive layer.

5. The optical pressure-sensitive adhesive sheet according to any one of claims 1 to 4, which has a total thickness of from 25 to 500 $\mu$m.

6. The optical pressure-sensitive adhesive sheet according to any one of claims 1 to 5, which is used for laminating an optical member.

7. The optical pressure-sensitive adhesive sheet according to claim 6, wherein the optical member is a glass-made optical member.

**EP 2 479 230 A1**

Europäisches Patentamt
European Patent Office
Office européen des brevets

# EUROPEAN SEARCH REPORT

Application Number

EP 12 15 2291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/255253 A1 (KISHIOKA HIROAKI [JP]) 7 October 2010 (2010-10-07) * abstract * * paragraphs [0032], [0039] - paragraph [0042] * * paragraphs [0054], [0067] - paragraphs [0072], [0096]; claims 1-3,5,8-11; examples; table 1 * | 1-7 | INV. C09J7/02 C09J7/00 C09J133/06 |
| X | ----- EP 1 835 003 A2 (NITTO DENKO CORP [JP]) 19 September 2007 (2007-09-19) * paragraph [0075] - paragraph [0083] * * paragraph [0088] - paragraph [0111]; claims 1-4,11-16; examples * | 1-7 | |
| X | ----- US 2001/021452 A1 (KISHIOKA HIROAKI [JP] ET AL) 13 September 2001 (2001-09-13) * abstract * * paragraph [0018] - paragraphs [0030], [0034]; claims 1,5 * ----- | 1,3,4 | |
| | | | TECHNICAL FIELDS SEARCHED (IPC) |
| | | | C09J |

The present search report has been drawn up for all claims

| Place of search | Date of completion of the search | Examiner |
|---|---|---|
| Munich | 2 May 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 15 2291

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2012

| Patent document cited in search report | | Publication date | Patent family member(s) | | Publication date |
|---|---|---|---|---|---|
| US 2010255253 | A1 | 07-10-2010 | CN 101857777 A<br>JP 2010241864 A<br>KR 20100109865 A<br>TW 201041997 A<br>US 2010255253 A1 | | 13-10-2010<br>28-10-2010<br>11-10-2010<br>01-12-2010<br>07-10-2010 |
| EP 1835003 | A2 | 19-09-2007 | EP 1835003 A2<br>JP 2007277521 A<br>KR 20070093909 A<br>US 2007218276 A1 | | 19-09-2007<br>25-10-2007<br>19-09-2007<br>20-09-2007 |
| US 2001021452 | A1 | 13-09-2001 | JP 3819661 B2<br>JP 2001234135 A<br>KR 20010085543 A<br>TW I241331 B<br>US 2001021452 A1 | | 13-09-2006<br>28-08-2001<br>07-09-2001<br>11-10-2005<br>13-09-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238915 A
- JP 2003342542 A
- JP 2004231723 A
- JP 3819661 B
- JP 2011013479 A